# EUROPÄISCHE PATENTSCHRIFT

(11) **EP 0 799 571 B1**
(45) Veröffentlichungstag und Bekanntmachung des Hinweises auf die Patenterteilung: **06.10.1999**
(21) Anmeldenummer: 97105091.9
(22) Anmeldetag: 26.03.1997
(51) Int. Cl.: A22C 13/00

(54) **Falthülle für einzeln abzufüllende Produkte**
Shirred casing for products to be stuffed individually
Boyau plissé pour produits à embosser individuellement

(30) Priorität: 01.04.1996 DE 19613069
(43) Veröffentlichungstag der Anmeldung: 08.10.1997
(73) Patentinhaber: Kalle Nalo GmbH, 65025 Wiesbaden (DE)
(72) Erfinder: Weinheimer, Alois, Dipl.-Ing., 55232 Alzey (DE); Seel, Gerald, 65232 Taunusstein (DE); Uhlmann, Dieter, Dipl.-Ing., 65203 Wiesbaden (DE)
(74) Vertreter: Zounek, Nikolai, Dipl.-Ing.

(56) Entgegenhaltungen:
- DE-A- 2 318 457
- DE-A- 4 314 949
- DE-U- 8 914 412

## Beschreibung

Die Erfindung betrifft eine Falthülle für einzeln abzufüllende Produkte, bestehend aus einer zu einer Raupe gerafften Hülle für die Umhüllung des einzelnen Produkts, wobei ein vorderes Ende der Hülle abgebunden ist.

Auf dem Gebiet geraffter, nicht verpackter Hüllen sind kleinkalibrige Wursthüllen mit einem Durchmesser von weniger als etwa 85 mm bekannt, die für viele Trockenwurstsorten eingesetzt werden. Beim konventionellen Verfahren zum Füllen von solchen Hüllen werden beispielsweise bekannte Füllmaschinen eingesetzt. Die gestreckten, flachen Hüllen, die an einem Ende abgebunden sind und beispielsweise eine Länge von 100 bis 180 cm aufweisen, werden in Wasser eingeweicht, um sie geschmeidig zu machen. Die eingeweichten Hüllen werden von Hand auf ein Füllhorn aufgeschoben und gerafft, wozu die Bedienungsperson sich ständig wiederholende Kräuselbewegungen mit der Hand ausführen muß, die außergewöhnlich ermüdend sind. Bei Hüllenlängen von mehr als 1,80 m werden Hüllen durch das Vorwässern völlig form- und gestaltslos, so daß es nicht mehr möglich ist, eine derartig lange Hülle auf das Füllrohr in der zur Verfügung stehenden Zeit, die durch den Maschinentakt vorgegeben wird, aufzuschieben. Die Hülle saugt sich dann nämlich an dem Füllrohr fest, so daß sie nicht mehr manuell gerafft werden kann.

Aus der DE-A 43 14 949 ist eine geraffte Hülle für Einzelprodukte bekannt, die kompakt verpackt ist, wodurch das Entraffen der Hülle vor dem Befüllen vermieden wird. Die so geraffte und kompakt verpackte Hülle kann von der Bedienungsperson einer Füllmaschine in der Hand gehalten und auf dem Füllhorn angebracht werden, ohne daß die Hülle von Hand gerafft werden muß. Die ungeraffte Hülle weist dabei eine Länge von 1,02 bis 1,52 m auf und ist nicht länger als etwa 1,78 m.

Bei einem anderen bekannten Verfahren, das gleichfalls in der DE-A 43 14 949 unter Bezugnahme auf den Abschnit III der Veröffentlichung "Sausage casing technology" erwähnt wird, herausgegeben von Indel Karmas, veröffentlicht von Noyes Data Corporation, New Jersey (1974) werden große Hüllelängen zu einer Raupe oder zu einem Strang gerafft. Die gerafften Stränge enthalten etwa 20 m Hülle, die auf eine Länge von etwa 35 bis 44 cm gerafft oder zusammengedrängt ist. Der Strang ist in ein Netz verpackt, welches ein Entraffen des Stranges verhindert und sein anschließendes Einweichen in Wasser zum Erzielen der Biegsamkeit und Dehnbarkeit der Hülle in gerafftem Zustand ermöglicht. Nach dem Einweichen wird die Verpackung entfernt und der Strang auf das Füllhorn geschoben. Im Vergleich zu der Verwendung von Einzelhüllen ist beim Einsatz von Strängen eine kompliziertere Maschine notwendig, da mit dieser die Hülle sowohl doppelt geclipt, geschnitten und in Schlingen gelegt als auch mit Brät gefüllt werden muß. Da der Strang eine weitaus größere Hüllenlänge als üblich aufweist, können mit dieser Maschine aus einem Strang zwanzig bis fünfzig Würste gefertigt werden.

Bei diesem Verfahren entfällt das Raffen der Hülle von Hand. Jedoch ist von Nachteil, daß beispielsweise der Durchmesser des Füllhorns im allgemeinen kleiner als der Durchmesser von Füllhörnern für Einzelhüllen sein muß. So wird beispielsweise bei solchen gerafften Hüllen für eine Wurst mit einem Durchmesser von 50 mm typischerweise ein Füllhorn mit einem Durchmesser von 28 mm oder weniger eingesetzt, im Vergleich dazu kann ein dickeres Füllhorn mit einem Durchmesser von 36 mm bei gleichem Durchmesser der Einzelhüllen wie die lange geraffte Hülle eingesetzt werden. Zum Verdichten von sehr langem Hüllenmaterial auf eine der Maschine angepaßten Länge muß im allgemeinen ein Raffdorn mit keinem Durchmesser verwendet werden. Das Problem des kleinen Innendurchmessers der gerafften Hülle wird beim Einweichen der Stränge in Wasser als Vorbereitung auf das Füllen noch verstärkt. Während des Einweichens quillt der Strang, was zu einer weiteren Verengung seiner lichten Weite führt und ein noch kleineres Füllhorn erforderlich macht. Der Einsatz eines längeren Füllhorns mit kleinerem Durchmesser ergibt eine langsamere Durchsatzleistung, vermehrte Fettschlieren und schlechtere Teilchenbestimmung.

Da heutzutage eine möglichst vollständige Kompostierung von Hüllen nach ihrer Verwendung erfolgen soll, wird angestrebt, Hüllen mit einer Länge größer als 1,50 m ohne zusätzliches Netz raffen zu können, da das für das Netz verwendete Material im allgemeinen nicht oder nur sehr schlecht kompostierbar ist.

Aufgabe der Erfindung ist es, eine Falthülle größerer Länge für ein einzelnes Produkt zu schaffen, deren Raupe ohne Netz oder sonstige kompakte Verpackung eine ausreichende Stabilität besitzt und die mit hoher Durchsatzgeschwindigkeit ohne die Gefahr eines Aufplatzens eines abgebundenen Endes der Hülle abgefüllt werden kann.

Diese Aufgabe wird erfindungsgemäß in der Weise gelöst, daß das vordere Ende der gestreckten Hülle in der Mitte eines vorgegebenen Abschnittes quer zur Hüllenlänge umgeschlagen ist und daß der umgeschlagene Abschnitt und ein ausgezogener Teil der Hülle plissiert und abgebunden sind. Dabei liegt die Abbindung an einer Kante des umgeschlagenen plissierten Abschnitts an.

Bei einer Ausgestaltung der Erfindung liegen zwei gleichgroße plissierte Abschnittslängen des vorderen Endes aufeinander. Dabei beträgt zweckmäßigerweise die Abschnittslänge wenigstens 2 cm. In Weiterbildung der Erfindung sind die Falten becher- bzw. schalenförmig ausgebildet, wobei jede Falte nach innen hin einwärts gebogen ist und eine Höhe von bis zu 20 mm aufweist und sind die Falten ineinander und zu einer Raupe zusammengefügt. Zweckmäßigerweise ist das an das vordere Ende der Hülle anschließende Hüllenstück in Gestalt eines Bechers mit gekrümmtem Boden ausgeformt, der sich in das Innere der Raupe erstreckt.

Die weitere Ausgestaltung der Erfindung ergibt sich aus den Merkmalen der Patentansprüche 7 bis 13.

Mit der Erfindung wird der Vorteil erzielt, daß eine Hülle für ein Einzelprodukt großer Länge von z.B. 1,50 bis 3,50 m einen Innendurchmesser besitzt, der nur geringfügig größer als der Durchmesser des Füllhorns ist, wodurch ein schnelles Abfüllen der Hülle mit einem Fülldruck von z.B. 0,6 bis 0,8 bar erreicht wird, ohne daß es zu Fettschlieren oder zu einem Aufreißen des einen abgebundenen Endes der Hülle kommt. Von Vorteil ist auch, daß die Raupe eine ausreichende Stabilität besitzt, auch nach Wässerung mit einer Mindestdauer von 30 min.

Die Erfindung wird im folgenden anhand der Zeichnungen näher erläutert. Es zeigen:
- Fig. 1: eine schematische Seitenansicht eines Endes und eines teilweise auseinandergezogenen Teils einer Falthülle,
- Fig. 2: das umgeschlagene Ende der Falthülle nach Figur 1 im plissierten Zustand und abgebunden,
- Fig. 3: eine Seitenansicht mit dem auf die Raupe der Falthülle zugeschobenen plissierten Ende,
- Fig. 4: einen Schnitt entlang der Linie A-A der Figur 3,
- Fig. 5: eine Draufsicht auf die Falthülle in Richtung des vorderen Ende,
- Fig. 6: eine gestreckte und abgefüllte Falthülle, und
- Fig. 7: einen schematischen Schnitt durch die auf ein Füllrohr aufgeschobene Falthülle während ihres Abfüllens.

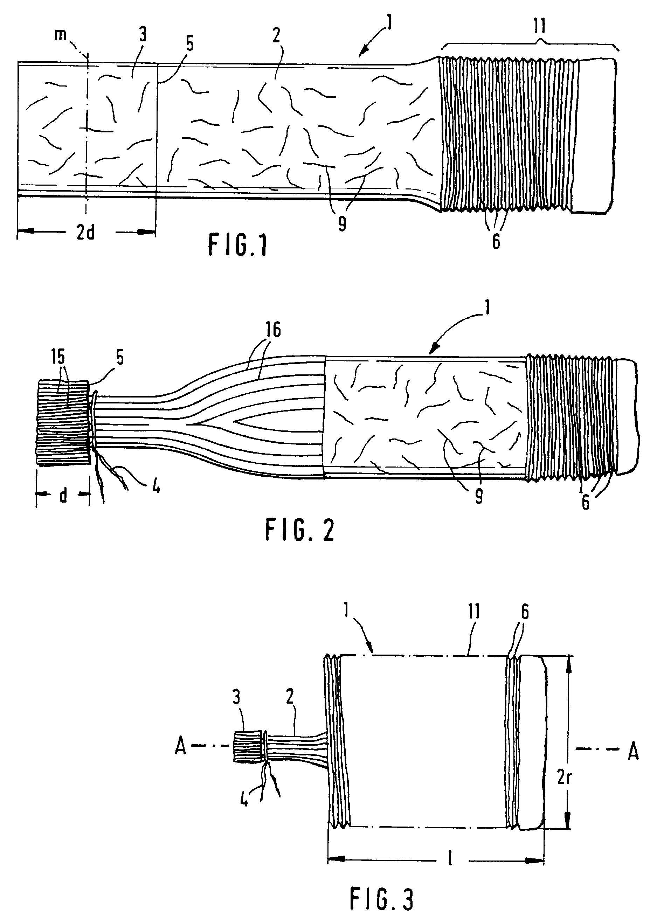

In Figur 1 ist eine schematische Seitenansicht eines Teils einer Falthülle 1 gezeigt. Die Falthülle 1 ist im rechten Teil der Zeichnung zu einer Raupe 11 zusammengeschoben, von der sich ein ausgezogenes Teil 2 nach links erstreckt, das in ein vorderes Ende 3 übergeht. Die Raupe 11 besteht aus ineinandergeschobenen becherförmigen Falten 6. Das Ende 3 hat zwei Abschnittslängen d, und wird durch eine Achse m quer zur Längsrichtung der Falthülle 1 in zwei Hälften geteilt. Das Teil 2 und das Ende 3 weisen Knickungen 9 auf, die dadurch zustandekommen, daß das Ende 3 und das Teil 2 der Falthülle 1 zunächst in die Raupe 11 eingeschoben sind und aus dieser zum Plissieren und Abbinden des vorderen Ende 3 der Falthülle 1 herausgezogen werden. Jedoch können das Teil 2 und das Ende 3 glatt, d.h. frei von Knickungen, sein. Das vordere Ende 3 der Falthülle 1 wird quer zur Längsrichtung der Falthülle 1 entlang der Achse m umgeschlagen, so daß die zwei gleichgroßen Abschnittslängen d und d aufeinander zu liegen kommen. Die Abschnittslänge d beträgt dabei mindestens 2 cm. Die beiden aufeinanderliegenden Abschnittslängen d, d sowie das Teil 2 werden anschließend plissiert, d.h. in Längsrichtung der Falthülle 1 gefaltet, wie dies schematisch aus Figur 2 ersichtlich ist. Das umgeschlagene Ende 3 wird entlang einer Kante 5 abgebunden. Dies geschieht beispielsweise durch eine Abbindung 4 in Form einer Schnur oder einer Kordel, die an der Kante 5 des umgeschlagenen plissierten Endes 3 anliegt.

Die Abbindung 4 in Figur 2 erfolgt mit oder ohne Schlaufen, je nachdem, ob ein Aufhängen der gefüllten Falthülle 1 vorgesehen ist oder diese horizontal sowohl transportiert als auch gelagert werden soll. Die Abbindung 4 sitzt vor dem umgeschlagenen und plissierten Ende 3 und wirkt während des Abfüllens der Falthülle 1 als Selbstabsperrung, da die Abbindung 4 an der Kante 5 an dem umgelegten Ende 3 anliegt und durch den ausgeübten Fülldruck im Inneren der Falthülle 1 gegen das umgelegte Ende 3 angedrückt wird, jedoch nicht darüber hinaus geschoben werden kann. Die Abbindung 4 läßt einen Fülldruck von 0,6 bis 0,8 bar während des Abfüllens der Falthülle 1 zu, ohne daß diese aufplatzt oder das vordere Ende 3 sich öffnet. Aus Figur 2 ist ersichtlich, daß die Plissierung mit Plissierfalten 16 sich über das Ende 3 hinaus auf das Teil 2 erstreckt, wobei die Plissierfalten 16 ebenso wie Plissierfalten 15 des umgelegten Endes 3 senkrecht auf die Zeichenebene gerichtet sind. Das Ende 3 wird auf einer kombinierten Raff- und Abbindemaschine umgeschlagen und mittels der Abbindung 4 abgebunden. Mittels dieser kombinierten Raff- und Abbindemaschine werden auch die Plissierfalten 15 und 16 angebracht.

In Figur 3 ist die Hülle 1 mit zusammen- und eingeschobenem Teil 2 dargestellt. In das Innere der Raupe 11 ist das in Figur 1 ausgestreckte Teil 2 so weit eingeschoben, daß nur das abgebundene Ende 3 und ein kleiner Abschnitt des Teils 2 außerhalb der Raupe 11 sich befinden. Der Außendurchmesser A der Raupe 11 beträgt z.B. 80 bis 95 mm, während Länge l der Raupe 11 etwa 80 bis 90 mm ist. Der Innendurchmesser der Raupe 11 beträgt 65 bis 75 mm. Bei einem Innendurchmesser von beispielsweise 70 mm der Raupe 11 erfolgt das Raffen der Falthülle 1 und der Raupe 11 auf einem Raffdorn mit einem Durchmesser von 73 mm. Zum Füllen einer derartigen gerafften Falthülle 1 kann ein Füllrohr mit einem Innendurchmesser von beispielsweise 60 mm verwendet werden. Die Faltdichte, gegeben durch das Verhältnis Länge der ungerafften Hülle 1 zur Länge der Raupe 11, liegt im allgemeinen im Bereich von 30 bis 40.

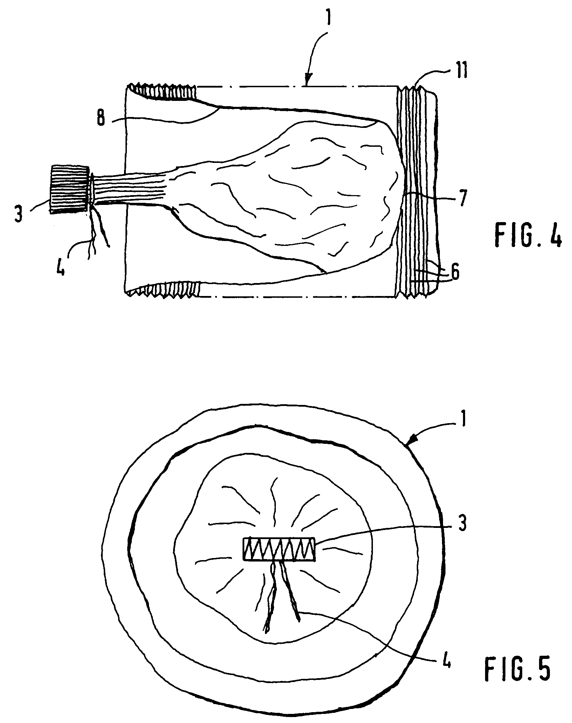

In Figur 4 ist ein Schnitt entlang der Linie A-A der Figur 3 gezeigt. Die Falten 6 der Raupe 11 sind becher- bzw. schalenförmig ausgebildet, wobei die einzelne Falte eine Höhe von etwa bis zu 20 mm aufweist. Die Falten sind ineinander zu der Raupe 11 zusammengefügt. Die sich über den Umfang der Raupe 11 erstreckenden Falten 6 sind nach innen hin einwärtsgebogen, d.h. sind nach innen hin über die Höhe des Umfangs konkav gekrümmt. Das an das vordere Ende 3 der Hülle 1 anschließende Teil 2 ist in das Innere der Raupe 11 eingestülpt und hat die Gestalt eines Bechers 8 mit gekrümmten Boden 7, wobei sich der Becher in das Innere der Raupe 11 erstreckt und nur das abgebundene Ende 3 und die Abbindung 4 von der Raupe 11 vorstehen. Für den Versand der Raupe 11 wird auch das Ende 3 noch in das Innere der Raupe 11 eingedrückt, um Platz zu sparen. In den Figuren 3 und 4 ist die Falthülle 1 zu einer Raupe 11 zusammengerafft und im wesentlichen bearbeitungsfertig zum Wässern und anschließendem Abfüllen der Falthülle auf einer Füllmaschine. Die hohe Faltdichte der Raupe 11 und die Höhe von bis zu 20 mm der einzelnen Falle 6 der Raupe sorgen für eine große Form- und Gestaltstabilität der Raupe 11, die auch nach längerem Vorwässern trotz Dehnung des Hüllmaterials im wesentlichen beibehalten werden.

Die Draufsicht in Figur 5 auf die geraffte Hülle 1 in Richtung des abgebundenen Endes 3 läßt die Plissierung und die Abbindung 4 des Endes 3 erkennen.

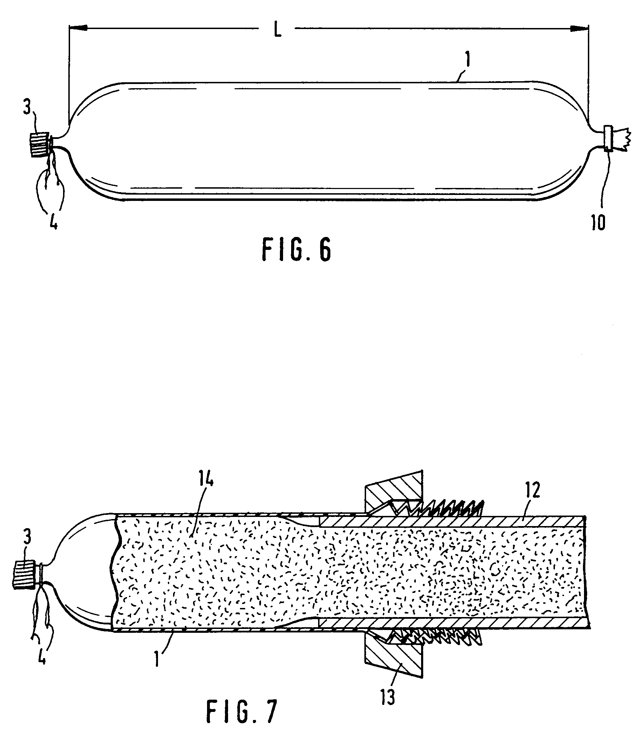

In Figur 6 ist schematisch eine mit einem Produkt, beispielsweise einem Wurstbrät, voll abgefüllte Hülle 1 der Länge L dargestellt. Das vordere, umgeschlagene und plissierte Ende 3 ist mit einer Schnur oder einer Kordel als Abbindung 4 verschlossen. Das hintere Ende verschließt einen Clip 10 aus Metall oder Kunststoff, der in bekannter Weise nach dem Ende des Füllvorgangs auf einer Füllmaschine angebracht wird. Die Länge der ungerafften Hülle 1 bzw. der abgefüllten Hülle 1, wie sie in Figur 6 gezeigt ist, liegt im Bereich von 1,5 bis 3,5 m und ist insbesondere gleich/größer als 1,8 m. Die Hülle 1 ist, wie schon zuvor erwähnt wurde, beispielsweise mit Wurstbrät gefüllt und wird im abgebundenen Zustand geräuchert und getrocknet. Sobald das Wurstbrät getrocknet ist, wird die Hülle 1 abgezogen und anschließend recycelt oder kompostiert. Wenn die Hülle 1 kompostiert wird, ist es von Vorteil, daß ein Netz, wie dies im Stand der Technik bei Längen über 1,80 m im allgemeinen erforderlich ist, entfällt, da sich dadurch eine Wiederaufbereitung bzw. ein Aufarbeiten des Netzes erübrigt. Die Feuchtigkeit vor dem Wässern der Hülle 1 bzw. der Raupe 11 muß kleiner als 18 % sein, anderenfalls müßte ein Fungizid der Hülle zugesetzt werden, was für das Kompostieren unzulässig ist, da das Fungizid Bakterien zerstören würde.

In Figur 7 ist schematisch im Schnitt die auf ein Füllrohr 12 aufgeschobene Hülle 1 während des Einfüllens eines Wurstbräts 14 gezeigt. Die Hülle 1 sitzt auf dem Füllrohr 12 auf, und ein Füllring 13 drückt die Hülle 1 an das Füllrohr 12 an. Der Außendurchmesser des Füllrohrs 12 hat in etwa die Größe des Innendurchmessers der Hülle 1. Der Fülldruck, mit dem das Wurstbrät 14 oder ein sonstiges Produkt in die Hülle 1 eingefüllt wird, liegt zwischen 0,6 und 0,8 bar, und die Abfüllgeschwindigkeit beträgt 21 bis 32 cm pro sec. Bevor die Raupe 11 auf das Füllrohr 12 manuell aufgeschoben wird, erfolgt eine Wässerung von wenigstens 30 bis 40 Minuten in Wasser, das beispielsweise eine Temperatur von bis zu 50 °C hat. Bei dieser Wässerung bleiben die Form und Gestalt der Raupe weitgehend erhalten, und die Längenausdehnung ist kleiner/gleich 1,5 % der Länge der ungefalteten Hülle 1 im Zustand vor dem Wässern. Der gekrümmte Boden 7 des Bechers 8 der senkrecht aufgestellten Raupe 11 kann Wasser aufnehmen und die Feuchtigkeit über eine längere Zeitspanne halten. Das Vorwässern dient dazu, die Geschmeidigkeit des Hüllenmaterials zu erhöhen und somit seine Handhabung zu erleichtern. Von Vorteil ist, daß die geringe Länge der Raupe 11 die Verschmutzung der Hülle auch bei längerer Lagerungszeit kleinhält. Üblicherweise wird das vordere Ende 3 der Hülle 1 umgeschlagen und anschließend plissiert, jedoch ist es auch möglich, daß das Ende 3 zuerst plissiert und anschließend umgeschlagen und abgebunden wird.

Die Hülle 1, wie sie in Figur 6 gezeigt ist, kann beispielsweise einen Durchmesser von 85 bis 90 mm zu Beginn des Füllvorgangs habe und ist durch das Vorwässern soweit dehnbar, daß nach Abschluß des Füllvorgangs der Durchmesser 105 bis 110 mm betragen kann.

## Patentansprüche

1. Falthülle (1) für einzeln abzufüllende Produkte, bestehend aus einer zu einer Raupe (11) gerafften Hülle für die Umhüllung des einzelnen Produkts, wobei ein vorderes Ende (3) der Hülle abgebunden ist, dadurch gekennzeichnet, daß das vordere Ende (3) der gestreckten Hülle (1) in der Mitte eines vorgegebenen Abschnittes (2d) quer zur Hüllenlänge umgeschlagen ist und daß der umgeschlagene Abschnitt und ein ausgezogener Teil (2) der Hülle (1) plissiert und abgebunden sind.

2. Falthülle nach Anspruch 1, dadurch gekennzeichnet, daß die Abbindung (4) an einer Kante (5) des umgeschlagenen plissierten Abschnittes (2d) anliegt.

3. Falthülle nach Anspruch 1, dadurch gekennzeichnet, daß zwei gleichgroße plissierte Abschnittslängen (d, d) des vorderen Endes (3) aufeinanderliegen.

4. Falthülle nach Anspruch 3, dadurch gekennzeichnet, daß die Abschnittslänge (d) wenigstens 2 cm beträgt.

5. Falthülle nach Anspruch 1, dadurch gekennzeichnet, daß die Falten (6) becher- bzw. schalfenförmig ausgebildet sind, wobei jede Falte nach innen hin einwärtsgebogen ist und eine Höhe von bis zu 20 mm aufweist und daß die Falten ineinander und zu einer Raupe (11) zusammengefügt sind.

6. Falthülle nach Anspruch 1, dadurch gekennzeichnet, daß das an das vordere Ende (3) der Hülle anschließende Hüllenstück in Gestalt eines Bechers (8) mit gekrümmtem Boden (7) ausgeformt ist, der sich in das Innere der Raupe (11) erstreckt.

7. Falthülle nach Anspruch 1, dadurch gekennzeichnet, daß die Länge der ungerafften Hülle (1) im Bereich von 1,5 m bis 3,5 m liegt, insbesondere gleich/größer 1,8 m ist.

8. Falthülle nach Anspruch 1, dadurch gekennzeichnet, daß die Hülle (1) mit Wurstbrät gefüllt ist und nach dem Räuchern und Trocknen des Wurstbräts von diesem abzieh- und recycelbar ist.

9. Falthülle nach Anspruch 1, dadurch gekennzeichnet, daß der Innendurchmesser der Raupe (11) 65 bis 75 mm und der Außendurchmesser 80 bis 95 mm betragen.

10. Falthülle nach Anspruch 1, dadurch gekennzeichnet, daß die Faltdichte, gegeben durch das Verhältnis Länge der ungerafften Hülle (1) zur Länge der Raupe (11), im Bereich von 30 bis 40 liegt.

11. Falthülle nach Anspruch 1, dadurch gekennzeichnet, daß eine Vorwässerung der Raupe (11) vor deren Verwendung wenigstens 30 bis 40 Minuten lang in einer Weise erfolgt, daß die Form und Gestalt weitgehend erhalten bleiben und die Längsausdehnung kleiner/gleich 1,5 % der Länge der Hülle (1) im Zustand vor dem Wässern ist.

12. Falthülle nach Anspruch 9, dadurch gekennzeichnet, daß der Außendurchmesser eines Füllrohrs (12) zum Einfüllen des Produkts wenigstens etwa gleich dem Innendurchmesser der Hülle (1) ist.

13. Falthülle nach Anspruch 1, dadurch gekennzeichent, daß der Fülldruck des abzufüllenden Produkts 0,6 bis 0,8 bar und die Abfüllgeschwindigkeit 21 bis 32 cm/sec betragen.

## Claims

1. A folded casing (1) for products to be filled individually, comprising a casing, folded to form a concertina (11), for wrapping the individual product, a front end (3) of the casing being tied up, wherein the front end (3) of the extended casing (1) is folded over transversely to the length of the casing in the middle of a predetermined section (2d) and wherein the folded-over section and an extended part (2) of the casing (1) are pleated and tied up.

2. The folded casing as claimed in claim 1, wherein the tying (4) bears against an edge (5) of the folded-over pleated section (2d).

3. The folded casing as claimed in claim 1, wherein two equal-sized pleated section lengths (d, d) of the front end (3) are superposed.

4. The folded casing as claimed in claim 3, wherein the section length (d) is at least 2 cm.

5. The folded casing as claimed in claim 1, wherein the folds (6) are shaped in the form of a cup or shell, each fold being bent inward and having a height of up to 20 mm, and wherein the folds are fitted into each other to form a concertina (11).

6. The folded casing as claimed in claim 1, wherein the casing piece adjoining the front end (3) of the casing is formed into the shape of a cup (8) with a curved bottom (7) which extends into the interior of the concertina (11).

7. The folded casing as claimed in claim 1, wherein the length of the unfolded casing (1) is in the range from 1.5 m to 3.5 m and especially is equal to/greater than 1.8 m.

8. The folded casing as claimed in claim 1, wherein the casing (1) is filled with sausage meat and, after the smoking and drying of the sausage meat, can be peeled off the latter and recycled.

9. The folded casing as claimed in claim 1, wherein the internal diameter of the concertina (11) is 65 to 75 mm and the outer diameter is 80 to 95 mm.

10. The folded casing as claimed in claim 1, wherein the folded density, given by the ratio of the length of the unfolded casing (1) to the length of the concertina (11), is in the range from 30 to 40.

11. The folded casing as claimed in claim 1, wherein a presoaking of the concertina (11) takes place, before it is used, for a period of at least 30 to 40 minutes in such a way that the form and shape are substantially preserved and the longitudinal extent is less than/equal to 1.5% of the length of the casing (1) in the state before the soaking.

12. The folded casing as claimed in claim 9, wherein the outer diameter of a filling tube (12) for filling the product in is at least approximately equal to the internal diameter of the casing (1).

13. The folded casing as claimed in claim 1, wherein the filling pressure of the product to be filled in is 0.6 to 0.8 bar and the filling speed is 21 to 32 cm/second.

## Revendications

1. Boyau plissé (1) pour des produits à remplir individuellement, constitué d'un boyau plissé en chenille (11) pour gainer le produit individuel, une extrémité avant (3) du boyau étant ficelée, caractérisé en ce que l'extrémité avant (3) du boyau étiré (1) est rabattue au centre d'une section prédéterminée (2d) transversalement à la longueur du boyau et en ce que la section rabattue et une partie étirée (2) du boyau (1) sont plissées et ficelées.

2. Boyau plissé selon la revendication 1, caractérisé en ce que le ficelage (4) s'applique sur un bord (5) de la section rabattue plissée (2d).

3. Boyau plissé selon la revendication 1, caractérisé en ce que deux longueurs de section plissées (d, d), de même grandeur, de l'extrémité avant (3) s'appliquent l'une sur l'autre.

4. Boyau plissé selon la revendication 3, caractérisé en ce que la longueur de section (d) est d'au moins 2 cm.

5. Boyau plissé selon la revendication 1, caractérisé en ce que les plis (6) sont conformés en auge ou en coupe, chaque plis étant replié vers l'intérieur et présentant une hauteur allant jusqu'à 20 mm, et en ce que les plis sont resserrés l'un dans l'autre pour former une chenille (11).

6. Boyau plissé selon la revendication 1, caractérisé en ce que le morceau de boyau raccordée à l'extrémité avant (3) du boyau se présente sous la forme d'une auge (8) avec un fond courbe (7), qui s'étend à l'intérieur de la chenille (11).

7. Boyau plissé selon la revendication 1, caractérisé en ce que la longueur du boyau non comprimé (1) se situe dans la plage de 1,5 à 3,5 m, en particulier est égale ou supérieure à 1,8 m.

8. Boyau plissé selon la revendication 1, caractérisé en ce que le boyau (1) est rempli de chair à saucisse et, après fumage et séchage de la chair à saucisse, peut en être retiré et recyclé.

9. Boyau plissé selon la revendication 1, caractérisé en ce que le diamètre intérieur de la chenille (11) est de 65 à 75 mm et le diamètre externe est de 80 à 95 mm.

10. Boyau plissé selon la revendication 1, caractérisé en ce que la densité de plissement donné par le rapport de la longueur du boyau non comprimé (1) à la longueur de la chenille (11) se situe dans la plage de 30 à 40.

11. Boyau plissé selon la revendication 1, caractérisé en ce que l'on effectue un prétrempage de la chenille (11) avant son utilisation pendant au moins 30 à 40 minutes de manière que la forme et l'aspect soient largement conservés et que la dilatation longitudinale soit inférieure ou égale à 1,5% de la longueur du boyau (1) dans l'état où il se trouve avant le trempage.

12. Boyau plissé selon la revendication 9, caractérisé en ce que le diamètre externe d'un tube de remplissage (12) pour le remplissage du produit est au moins environ égal au diamètre interne du boyau (1).

13. Boyau plissé selon la revendication 1, caractérisé en ce que la pression de remplissage du produit à fourrer est de 0,6 à 0,8 bar et la vitesse de remplissage est de 21 à 32 cm/s.
